# EUROPÄISCHE PATENTSCHRIFT

(11) **EP 2 371 593 B1**
(45) Veröffentlichungstag und Bekanntmachung des Hinweises auf die Patenterteilung: **19.09.2012**
(21) Anmeldenummer: 11157844.9
(22) Anmeldetag: 11.03.2011
(51) Int. Cl.: B60J 5/04

(54) **Verfahren zur Herstellung eines Türaufprallträgers**
Method for manufacturing a door impact beam
Procédé de fabrication d'un poutre de choc de portière

(30) Priorität: 22.03.2010 DE 102010011973
(43) Veröffentlichungstag der Anmeldung: 05.10.2011
(73) Patentinhaber: Benteler Deutschland GmbH, 33104 Paderborn (DE)
(72) Erfinder: Özdem, Dr. Kenan, 34414, Warburg (DE); Säuberlich, Dr. Thomas, 33332, Gütersloh (DE); Jarosch, Andreas, 33129, Delbrück (DE)
(74) Vertreter: Griepenstroh, Jörg

(56) Entgegenhaltungen:
- EP-A2- 0 330 759
- EP-B1- 0 425 059
- DE-C1- 3 728 476

## Beschreibung

Die Erfindung betrifft ein Verfahren zur Herstellung eins Türaufprallträgers für Fahrzeugtüren eines Kraftfahrzeugs gemäß den Merkmalen des Patentanspruchs 1 sowie die Verwendung des Türaufprallträgers.

Zur Gewährleistung der Kraftfahrzeug-Insassensicherheit bei einem Seitencrash werden die Seitentüren von Kraftfahrzeugen verstärkt. Als Verstärkungselemente finden Blechbauteile ebenso Anwendung wie nahtlose Stahlrohre, geschweißte Stahlrohre und Aluminiumstrangpressprofile unterschiedlicher Formgebung. Die Verstärkungselemente sollen dabei während eines Seitencrashs die Intrusion der Fahrzeugtür in die Fahrzeugzelle reduzieren helfen, um bei den Insassen die Verletzungsgefahr möglichst gering zu halten bzw. um Verletzungen ganz zu vermeiden. Dies stellt jedoch eine besondere Herausforderung dar, da die seitliche Fahrzeugstruktur im Vergleich zum Vorderwagen bzw. Hinterwagen keine Knautschzone aufweist und daraus folgend das Energieabsorptionsvermögen durch Verformung geringer ist.

Diesem Nachteil kann begegnet werden durch die Verwendung von Stahlwerkstoffen, die durch Wärmebehandlungen und abgestimmte chemische Analyse hohe mechanische Kennwerte erzielen. Zudem erhalten Türaufprallträger eine spezielle Formgebung, die auf die zu erwartenden Anprallkräfte und Anprallrichtungen abgestimmt ist.

In der EP 0 425 059 B1 wird offenbart, dass durch die Verwendung von Kohlenstoff-Mangan-Borstahl mit anschließender Vergütung Eigenschaften erzielt werden, die den Anforderungen des Seitencrashs genügen. Die Erzielung der hohen mechanischen Kennwerte wird aber hierbei nur durch aufwendiges Härten und Anlassen des Bauteils erreicht. Da das Härten und Anlassen nicht bereits während des Rohrherstellungsprozesses erfolgen kann, ergeben sich kostentechnische Nachteile. Ferner ist von Nachteil, dass die zusätzlich durchzuführenden Wärmebehandlungen zur Erzielung einer hohen Festigkeit zu einem Verzug der Bauteile führen, wenn die Bauteile nicht hinreichend fixiert werden. Eine Fixierung der Bauteile ist aber zur Sicherstellung der Maßhaltigkeit und der Bauteilform unabdingbar. Der Kostenaufwand hierfür ist nicht unbeträchtlich. Auch die Verwendung von speziell beschichteten Bändern zur Vermeidung oder Reduktion von Randentkohlungen und Zunder, die aus dem Härten an Luft resultieren, erhöhen den finanziellen Aufwand deutlich.

Ferner wird in der EP 0 425 059 B1 beschrieben, dass nach dem Härten eine lokale Formgebung am Rohr erfolgt, um zusätzlich durch Kaltverfestigungen in diesem Bereich die Festigkeit zu steigern. Nachteilig hierbei ist, dass bei der Formgebung nach dem Härten gerade die Dehnungswerte deutlich abnehmen. Diese sind wiederum relevant, um einen gewissen Grad an Verformung des Bauteils unter Last zu gewährleisten, so dass ohne starke Materialeinschnürung und verfrühter Rissinitiierung und -ausbreitung ein Totalausfall des Bauteils auftritt. Ein Totalausfall des Bauteils hätte fatale Folgen für das Unfallopfer während des Unfallgeschehens.

Die DE 37 28 476 C1 betrifft eine rohrförmige Türverstärkung aus einem Stahlwerkstoff. Es handelt sich um einen hochlegierten Stahl. Die positiven Eigenschaften dieses Stahls werden allerdings durch sehr hohe Werkstoffkosten durch Zugabe von Nickel und Molybdän erkauft.

In der EP 0 330 759 A2 wird ein Profil aus dem Leichtmetallwerkstoff Aluminium beschrieben, das als Verstärkungselement in der Fahrzeugtür dienen soll. Zwar besitzt Aluminium ein geringeres spezifisches Gewicht, allerdings auch einen deutlich geringeren E-Modul. Dies macht die Verwendung von dickwandigeren Profilen erforderlich, um ähnlich hohe Bauteilsteifigkeiten wie bei Stahlbauteilen zu erzielen. Dadurch wird jedoch der Gewichtsvorteil des Aluminiums im Vergleich zu Stahlwerkstoffen nahezu egalisiert.

Der Erfindung liegt die Aufgabe zugrunde, ein Verfahren zur Herstellung eines Türaufprallträgers aufzuzeigen, mit welchem es möglich ist, einen leichtbauenden Türaufprallträger mit hervorragender Crashperformance möglichst kostengünstig herzustellen. Die Gesamtfertigung einschließlich des Einbaus soll mit geringem Aufwand und niedrigen Kosten durchgeführt werden können.

Diese Aufgabe ist bei einem Verfahren mit den Merkmalen des Patentanspruchs 1 gelöst. Die Verwendung des Türaufprallträgers für einen kostengünstigen Einbau ist Gegenstand des Patentanspruchs 8.

Vorteilhafte Weiterbildungen des Verfahrens sind Gegenstand der Unteransprüche.

Bei dem erfindungsgemäßen Verfahren sind folgende Fertigungsschritte vorgesehen:
a) Aus einem höchstfesten Stahlband mit einem Ausgangsgefüge, das vorwiegend martensitisch ausgeprägt ist mit Anteilen an Bainit, d. h. mehr als 50 % Martensit und weniger als 50 % Bainit enthält, wird durch Kaltumformung und Längsnahtschweißen ein Vorrohr mit kreisrundem Querschnitt hergestellt;
b) Das Vorrohr wird unmittelbar im Anschluss an das Längsnahtschweißen in einem Kalibrierschritt durch Kaltumformung zu einem Hohlprofilstrang mit nierenförmigem Querschnitt umgeformt, wobei der Hohlprofilstrang eine Festigkeit Rm von mehr als 1.150 MPa aufweist;
c) Der Hohlprofilstrang wird abgelängt;
d) Die abgelängten Stücke des Hohlprofilstrangs werden endseitig mit einem Formschnitt versehen.

Um eine optimierte Crashperformance des Bauteils zu erreichen, ist es erforderlich, ein deutlich erhöhtes Energieabsorptionsvermögen zu realisieren, ohne das Gewicht zu erhöhen und ohne die Gestaltung des Bauteils besonders kompliziert zu machen. Das bedeutet, dass das Biegewiderstandsmoment des Bauteils entsprechend hoch sein muss. Dies wird grundsätzlich über die Steifigkeit des Bauteils erzielt, welche wiederum von Parametern, wie der Materialdicke und der Bauteilform, abhängt.

Auch hohe mechanische Kennwerte wie die Streckgrenze Re und die Zugfestigkeit Rm tragen unter schlagartiger Belastung des Bauteils dazu bei, Energie zu absorbieren. Im Rahmen der Erfindung wird ein Werkstoff eingesetzt, welcher bereits als Bandmaterial im Ausgangszustand hohe Festigkeiten bei ausreichender Duktilität aufweist und so die erforderliche Bauteilstabilität bieten kann. Das Ausgangsgefüge des Werkstoffs ist daher vorwiegend martensitisch ausgeprägt (>50 %) mit Anteilen an Bainit (<50%), um eine notwendige plastische Verformung für den kalten Rohrformprozess mit anschließender Profilformgebung bieten zu können. Unter höchstfestem Stahlband sind Stahlbänder mit Ausgangsfestigkeiten Rm von mehr als 1.100 MPa zu verstehen. Vorzugsweise liegen die Festigkeiten Rm über 1.300 MPa.

Das bereitgestellte, höchstfeste Stahlband wird auf einer Rohrschweißstraße zu einem Vorrohr mit kreisrundem Querschnitt geschweißt. An eine Rohrschweißstraße schließt sich ein Kalibrierwerk an. Im Rahmen der Erfindung wird unmittelbar nach dem Schweißen des Vorrohrs dieses in Kalibrierschritten durch speziell angeordnete Kalibrierrollen in eine nierenähnliche Form gebracht. Das Vorrohr wird nach dem Umformen in die nierenähnliche Form als Hohlprofilstrang bezeichnet. Durch die eignungsgemäße Formgebung des Vorrohrs im Kalibrierwerk der Rohrschweißstraße in Kombination mit dem verwendeten höchstfestem Bandmaterial ist das Bauteil direkt gefertigt und bietet höchste Stabilität bei kurzer und somit kostengünster Fertigungsweise. Eine separate Wärmebehandlung, wie zum Beispiel das Vergüten, ist nicht erforderlich. Dadurch können in erheblichem Maße Fertigungskosten eingespart werden.

Es hat sich gezeigt, dass die am fertigen Hohlprofilstrang zu messenden Festigkeiten Rm deutlich oberhalb von 1.150 MPa liegen, wobei neben der Festigkeit des eingesetzten Bandes die Kaltumformung bei der Herstellung des Hohlprofilstrangs weiter festigkeitssteigernd wirkt.

Es ist mit dem erfindungsgemäßen Verfahren möglich, ein vorbeschichtetes Stahlband zu verwenden. Die fertigen Türaufprallträger sind dadurch korrosionsgeschützt. Da eine nachfolgende Wärmebehandlung entfällt, kann die Korrosionsschutzschicht auch nicht zerstört werden.

Ein weiterer Vorteil ist, dass der Hohlprofilstrang nur noch abgelängt und endseitig mit einem Formschnitt versehen werden muss und unmittelbar in die Tür eines Kraftfahrzeugs eingeschweißt werden kann. Es kann auf separate Anbindungen, wie zum Beispiel Montageflansche, die in der Regel aus Blech geformt sind und separat gefertigt werden, vollkommen verzichtet werden. Das Verbinden eines Montageflansches mit dem Türverstärkungselement des Türaufprallträgers erfolgt üblicherweise mittels thermischer Fügeverfahren wie dem MIG- oder MAG-Schweißverfahren. Dies stellt für die Gesamtfertigung einen erhöhten Aufwand dar und kann unnötig hohe Kosten verursachen.

Mit der Erfindung ist es somit möglich, bei sehr geringer Fertigungstiefe höchstfeste Werkstoffe zunächst zu einem Rohr und unmittelbar anschließend zu einem eignungsgemäß gestalteten Profil umzuformen, wobei sich die Kaltumformung festigkeitssteigernd auswirkt. Die formgebenden Bearbeitungsschritte wie das Ablängen und finale Formschneiden, beispielsweise durch Fixiersägen oder Konturschneiden mittels eines Lasers, sind weniger kostenintensiv als nachträgliche Wärmebehandlungen. Dadurch kann bei sehr niedrigen Fertigungskosten, gleichzeitig hoher Crashverformung und zudem geringem Gewicht aufgrund anforderungsgerechter Gestalt auf kostengünstige Weise ein Türaufprallträger hergestellt werden.

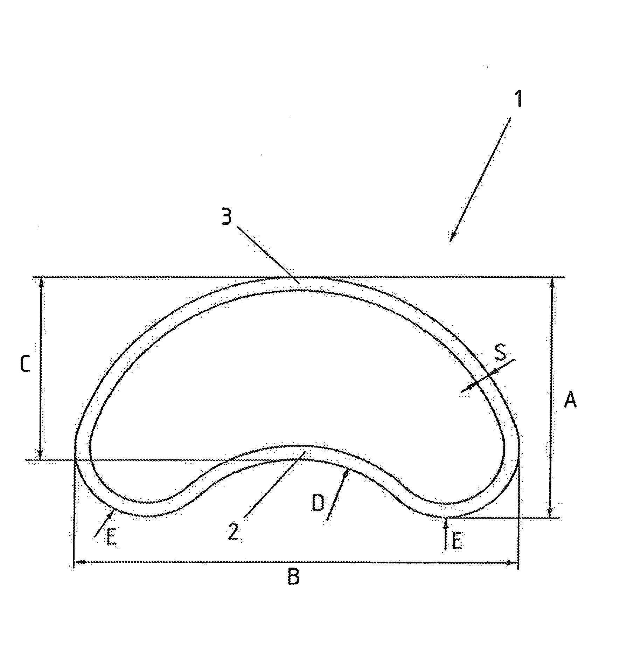

Als besonders vorteilhaft hat sich herausgestellt, wenn das Rohrprofil während des Kalibrierungsschrittes so umgeformt wird, dass sich bestimmte geometrische Verhältnisse einstellen. Als besonders günstig hat sich ein nierenähnlicher oder nierenförmiger Querschnitt des Hohlprofils gezeigt, der bestimmten geometrischen Bedingungen folgt. Diese geometrischen Bedingungen werden nachfolgend anhand des in der Zeichnung schematisch dargestellten Ausführungsbeispiels erläutert.

Die Figur zeigt einen Querschnitt durch ein zu einem Hohlprofilstrang umgeformtes Rohrprofil. Dieser Querschnitt entspricht dem Querschnitt des fertigen Türaufprallträgers.

Es handelt sich um einen nierenförmigen oder nierenähnlichen Hohlprofilstrang 1, der geformt ist wie ein Oval, allerdings an seiner in der Bildebene unteren Seite eine konkave Einbuchtung besitzt, die als Nierenbucht 2 bezeichnet wird. An der der Nierenbucht 2 gegenüberliegenden Seite ist der Hohlprofilstrang 1 konvex gekrümmt. Diese Krümmung erstreckt sich zwischen endseitigen Bereichen des nierenförmigen Hohlprofils 1, die auch als Nierenpole bezeichnet werden können. Im Bereich der Nierenpole befindet sich ein Übergangsbereich, in welchem der Radius kleiner wird als im Bereich der Nierenbucht 2 und im Bereich des konvex gekrümmten Nierenrückens 3.

Die geometrischen Verhältnisse lassen sich durch die nachfolgend erläuterten Parameter definieren. Der Ausgangsparameter ist die Breite B, die in der Bildebene horizontal von Nierenpol zu Nierenpol gemessen wird. Alle weiteren geometrischen Größen werden in Abhängigkeit hiervon dargestellt. Zunächst wird die Wanddicke S so gewählt, dass sie in einem Bereich von 1/40 bis 1/30 x der Breite B liegt. Bei einer vorgegebenen Wanddicke S von zum Beispiel 2 mm wird die Breite B entsprechend eingestellt und beträgt 60 mm bis 80 mm.

Die senkrecht zur Breite B gemessene maximale Höhe A, die sich von den Nierenpolen bis zum Nierenrücken 3 erstreckt, wird so gewählt, dass folgende Bedingung gilt: A = 0,4 x B bis 0,6 x B, insbesondere gilt A = 0,5 x B.

Die Höhe C vom Tiefsten der konkaven Nierenbucht 2 gemessen ist dementsprechend kleiner und liegt in einem Bereich von 0,3 x B bis 0,4 x B. Sie beträgt insbesondere 1/3 x B.

Der Radius D im Bereich der konkaven Nierenbucht 2 liegt vorzugsweise in einem Bereich von 0,3 x B bis 0,4 x B. Insbesondere beträgt er 1/3 x B.

Der Radius E im Übergangsbereich von der konkaven Nierenbucht 2 zu den endseitigen Nierenpolen liegt in einem Bereich von 0,16 x B bis 0,2 x B und beträgt insbesondere 1/6 x B.

### Bezugszeichen:

- 1 -: Hohlprofil
- 2 -: Nierenbucht
- 3 -: Nierenrücken

- A -: Höhe
- B -: Breite
- C -: Höhe
- D -: Radius
- E -: Radius
- S-: Wanddicke

## Patentansprüche

1. Verfahren zur Herstellung eines Türaufprallträgers für eine Fahrzeugtür mit folgenden Schritten:
a) Aus einem höchstfesten Stahlband mit einer Ausgangsfestigkeit Rm von mehr als 1.100 MPa und mit einem Ausgangsgefüge, das mehr als 50 % Martensit und weniger als 50 % Bainit enthält, wird durch Kaltumformung und Längsnahtschweißen ein Vorrohr mit kreisrundem Querschnitt hergestellt;
b) Das Vorrohr wird unmittelbar im Anschluss an das Längsnahtschweißen in einem Kalibrierschritt durch Kaltumformung zu einem Hohlprofilstrang (1) mit nierenförmigem Querschnitt umgeformt, wobei der Hohlprofilstrang (1) eine Festigkeit Rm von mehr als 1.150 MPa aufweist;
c) Der Hohlprofilstrang (1) wird abgelängt;
d) Die abgelängten Stücke des Hohlprofilstrangs (1) werden endseitig mit einem Formschnitt versehen.

2. Verfahren nach Anspruch 1, **dadurch gekennzeichnet, dass** Stahlband verwendet wird, welches mit einer Korrosionsschutzbeschichtung vorbeschichtet ist.

3. Verfahren nach Anspruch 1, oder 2, **dadurch gekennzeichnet, dass** das Rohrprofil im Kalibrierschritt (b) so umgeformt wird, dass sich im Querschnitt eine Breite (B) einstellt und eine senkrecht zu Breite (B) gemessene maximale Höhe (A), wobei A = 0,4 x B bis 0,6 x B und insbesondere A = 0,5 x B ist.

4. Verfahren nach einem der Ansprüche 1 bis 3, **dadurch gekennzeichnet, dass** das Rohrprofil im Kalibrierschritt (b) so umgeformt wird, dass sich im Querschnitt eine Breite (B) einstellt und eine senkrecht zur Breite (B) gemessene Höhe (C) im Tiefsten einer konkaven Nierenbucht (2), einstellt die in einem Bereich von 0,3 x B bis 0,4 x B liegt und insbesondere 1/3 x B beträgt.

5. Verfahren nach einem der Ansprüche 1 bis 4, **dadurch gekennzeichnet, dass** das Rohrprofil im Kalibrierschritt (b) so umgeformt wird, dass sich im Querschnitt eine Breite (B) einstellt, wobei die Wanddicke (S) in einem Bereich von 1/40 bis 1/30 x B liegt.

6. Verfahren nach einem der Ansprüche 1 bis 5, **dadurch gekennzeichnet, dass** das Rohrprofil im Kalibrierschritt (b) so umgeformt wird, dass sich im Querschnitt eine Breite (B) einstellt, wobei ein Radius (D) im Bereich einer konkaven Nierenbucht (2) des nierenförmigen Hohlprofilstrangs (1) hergestellt wird, der in einem Bereich von 0,3 x B bis 0,4 x B liegt und insbesondere 1/3 x B beträgt.

7. Verfahren nach einem der Ansprüche 1 bis 5, **dadurch gekennzeichnet, dass** das Rohrprofil im Kalibrierschritt (b) so umgeformt wird, dass sich im Querschnitt eine Breite (B) einstellt, wobei ein Radius (E) im Übergangsbereich von einer konkaven Nierenbucht (2) zu endseitigen Nierenpolen des nierenförmigen Hohlprofilstrangs (1) hergestellt wird, der in einem Bereich von 0,12 x B bis 0,2 x B liegt und insbesondere 1/6 x B beträgt.

8. Verwendung eines gemäß einem der vorhergehenden Patentansprüche hergestellten Türaufprallträgers, welcher ohne weitere Wärmebehandlung in eine Tür eines Kraftfahrzeugs geschweißt wird.

## Claims

1. Method for manufacturing a door impact beam for a vehicle door with the following steps:
a) A pipe blank with a circular section is made from a highest-strength steel strip with an initial strength Rm of more than 1.100 MPa and with an initial structure containing over 50% martensite and less than 50% bainite, by cold-forming and longitudinal seam welding;
b) Immediately after the longitudinal seam welding, the pipe blank is reshaped in a calibration stage by cold-forming to make an extruded hollow profile (1) with a kidney-shaped cross-section, whereby the extruded hollow profile (1) has a strength Rm of more than 1.150 MPa;
c) The extruded hollow profile (1) is cut to length;
d) The cut-to-length pieces of the extruded hollow profile (1) are fitted at their ends with a shaped piece.

2. Method according to claim 1, **characterised in that** steel strip is used which has previously been coated with a corrosion-proof coating.

3. Method according to claim 1 or 2 **characterised in that** the pipe profile is re-shaped in the calibration stage (b) such that in cross-section a width (B) is obtained and a maximum height (A) measured perpendicularly to width (B), where A = 0.4 x B to 0.6 x B and in particular A = 0.5 x B.

4. Method according to one of claims 1 to 3 **characterised in that** the pipe profile is re-shaped in the calibration stage (b) such that in cross-section a width (B) is obtained and a maximum height (C) measured perpendicularly to width (B) in the deepest point of the concave kidney-shaped depression (2) is obtained which lies in a range of 0.3 x B to 0.4 x B and is in particular 1/3 x B.

5. Method according to one of claims 1 to 4 **characterised in that** the pipe profile is re-shaped in the calibration stage (b) such that in cross-section a width (B) is obtained whereby the wall thickness (S) lies in a range of 1/40 to 1/30 x B.

6. Method according to one of claims 1 to 5 **characterised in that** the pipe profile is re-shaped in the calibration stage (b) such that in cross-section a width (B) is obtained, whereby a radius (D) is produced in the area of a concave kidney-shaped depression (2) of the kidney-shaped extruded hollow profile (1), said radius lying in a range of 0.3 x B to 0.4 x B and being in particular 1/3 x B.

7. Method according to one of claims 1 to 5 **characterised in that** the pipe profile is re-shaped in the calibration stage (b) such that in cross-section a width (B) is obtained, whereby a radius (E) is produced in the transitional area from a concave kidney-shaped depression (2) to kidney-shaped poles at the ends of the kidney-shaped extruded hollow profile (1), said radius lying in a range of 0.12 x B to 0.2 x B and being in particular 1/6 x B.

8. Use of a door impact beam made according to one of the foregoing patent claims which is welded into a door of a motor vehicle without further heat treatment.

## Revendications

1. Procédé de fabrication d'un amortisseur d'impacts dévolu à une porte de véhicule, comprenant les étapes suivantes :
a) une ébauche tubulaire de section transversale circulaire est produite, par déformation à froid et soudage longitudinal, à partir d'un ruban d'acier à résistance extrême présentant une résistance initiale Rm supérieure à 1 100 MPa et une structure initiale renfermant plus de 50 % de martensite et moins de 50 % de bainite ;
b) dans l'enchaînement direct du soudage longitudinal, ladite ébauche tubulaire est amenée par déformation à froid, lors d'une étape de calibrage, à la forme d'un boudin profilé creux (1) de section transversale réniforme, ledit boudin profilé creux (1) présentant une résistance Rm supérieure à 1 150 MPa ;
c) ledit boudin profilé creux (1) est débité à longueur ;
d) les extrémités des tronçons débités dudit boudin profilé creux (1) sont munies d'une découpe profilée.

2. Procédé selon la revendication 1, **caractérisé par** l'utilisation d'un ruban d'acier recouvert, au préalable, d'un revêtement de protection contre la corrosion.

3. Procédé selon la revendication 1 ou 2, **caractérisé par le fait que** le profilé tubulaire est déformé, au cours de l'étape de calibrage b), de façon telle qu'il s'instaure, en coupe transversale, une largeur (B) et une hauteur maximale (A) mesurée perpendiculairement à ladite largeur (B), sachant que A = 0,4 x B à 0,6 x B et, en particulier, A = 0,5 x B.

4. Procédé selon l'une des revendications 1 à 3, **caractérisé par le fait que** le profilé tubulaire est déformé, au cours de l'étape de calibrage b), de façon telle qu'il s'instaure, en coupe transversale, une largeur (B) et une hauteur (C) qui, mesurée perpendiculairement à ladite largeur (B) dans la zone la plus profonde d'une anse réniforme concave (2), est située dans une plage de 0,3 x B à 0,4 x B et mesure, en particulier, 1/3 x B.

5. Procédé selon l'une des revendications 1 à 4, **caractérisé par le fait que** le profilé tubulaire est déformé, au cours de l'étape de calibrage b), de façon telle qu'une largeur (B) s'instaure en coupe transversale, l'épaisseur de paroi (S) étant située dans une plage de 1/40 à 1/30 x B.

6. Procédé selon l'une des revendications 1 à 5, **caractérisé par le fait que** le profilé tubulaire est déformé, au cours de l'étape de calibrage b), de façon telle qu'une largeur (B) s'instaure en coupe transversale, produisant ainsi, dans la zone d'une anse réniforme concave (2) du boudin profilé creux réniforme (1), un rayon (D) situé dans une plage de 0,3 x B à 0,4 x B et mesurant, en particulier, 1/3 x B.

7. Procédé selon l'une des revendications 1 à 5, **caractérisé par le fait que** le profilé tubulaire est déformé, au cours de l'étape de calibrage b), de façon telle qu'une largeur (B) s'instaure en coupe transversale, produisant ainsi, dans la zone de transition entre une anse réniforme concave (2) et des lobes réniformes extrêmes du boudin profilé creux réniforme (1), un rayon (E) situé dans une plage de 0,12 x B à 0,2 x B et mesurant, en particulier, 1/6 x B.

8. Utilisation d'un amortisseur d'impacts dévolu à une porte et fabriqué conformément à l'une des revendications précédentes, soudé dans une porte de véhicule automobile sans traitement thermique supplémentaire.
